# FASCICULE DE BREVET EUROPEEN

(11) **EP 3 137 570 B1**
(45) Date de publication et mention de la délivrance du brevet: **27.06.2018**
(21) Numéro de dépôt: 15719688.2
(22) Date de dépôt: 28.04.2015
(51) Int. Cl.: C09J 183/12, B60C 19/00

(54) **PNEUMATIQUE AVEC UNE BANDE DE MOUSSE AMORTISSANTE**
REIFEN MIT STREIFEN AUS DÄMPFENDEM SCHAUM
TYRE COMPRISING A STRIP OF DAMPING FOAM

(30) Priorité: 30.04.2014 FR 1453943; 10.06.2014 FR 1455220
(43) Date de publication de la demande: 08.03.2017
(73) Titulaire: Compagnie Générale des Etablissements Michelin, 63000 Clermont-Ferrand (FR)
(72) Inventeur: LAUBRY, Philippe, F-63040 Clermont-Ferrand (FR)
(74) Mandataire: Dequire, Philippe Jean-Marie Denis
(86) Numéro de dépôt international: PCT/EP2015/059198
(87) Numéro de publication internationale: WO 2015/165899

(56) Documents cités:
- EP-A1- 2 397 314
- EP-A2- 2 554 617
- US-A1- 2012 168 080

## Description

### Domaine de l'invention

La présente invention est relative aux pneumatiques, et plus particulièrement aux pneumatiques comportant sur leur surface interne une bande de mousse destinée à amortir les bruits de cavité liés à la mise en résonance de l'air contenu dans la cavité interne des pneumatiques lors du roulage.

### État de la technique

Le développement de la technique automobile avec en particulier l'apparition des véhicules à propulsion électrique renforce les exigences des consommateurs en termes de bruits acceptables dans l'habitacle des véhicules.

Les bruits de cavité peuvent être particulièrement gênants car ils se situent dans une gamme de fréquence tout à fait audible.

Il est connu de disposer dans la cavité interne des pneumatiques une mousse amortissante, voir par exemple US 7,975,740 B2. Toutefois, il est nécessaire de fixer solidement et de façon durable cette bande de mousse. La présence à la surface de la gomme intérieure d'agents de démoulage ou de traces de ces agents de démoulage fait perdre à beaucoup de systèmes de collage leur pouvoir d'adhésion comme le montre le document EP 2 554 617 A2. L'assemblage mousse/gomme intérieure doit aussi résister à des conditions de roulage difficiles, notamment à des températures ainsi que des taux d'humidité élevés.

Le document EP divulgue un pneumatique comportant une gomme intérieure faisant face à une cavité interne du pneumatique, une couche adhésive disposée sur la gomme intérieure et une bande de mousse amortissante de bruit fixée à la gomme intérieure par la couche adhésive, dans lequel la couche adhésive est à base d'un adhésif silicone.

### Description brève de l'invention

L'invention a pour objet un pneumatique similaire caractérisé en ce que la couche adhésive est à base d'un polyéther silanisé.

L'utilisation d'une telle couche adhésive a l'avantage de ne comporter aucun solvant ni aucun isocyanate. Elle permet aussi d'améliorer la fixation de la bande de mousse même dans des conditions de roulage humides et chaudes.

De préférence, le polyéther silanisé est un polyéther téléchélique fonctionnel alkoxysilane.

À titre d'exemple l'alkoxysilane peut être le méthyldiméthoxysilane.

Le polyéther peut avantageusement être un polyoxypropylène.

La mousse de la bande de mousse amortissante est avantageusement une mousse de polyuréthanne à cellules ouvertes.

Selon un mode préférentiel de réalisation, la bande de mousse est une bande continue circonférentiellement.

Selon un autre objet, l'invention concerne un procédé de fixation d'une bande de mousse amortissante de bruit sur la surface de la gomme intérieure d'un pneumatique neuf, dans lequel :
- on applique sur la surface de la gomme intérieure et/ou sur la surface radialement extérieure de la bande de mousse une couche d'adhésif à base de polyéther silanisé ;
- on met en place la bande de mousse contre la surface de la gomme intérieure ; et
- on laisse réticuler la couche d'adhésif.

Avantageusement, avant de fixer la bande de mousse amortissante de bruit sur la surface de la gomme intérieure du pneumatique,
- on traite la surface de la gomme intérieure dudit pneumatique avec un jet d'eau haute pression pour nettoyer ladite surface ; et
- on sèche la surface de la gomme intérieure.

Ce traitement permet d'enlever la plus grande partie des agents de démoulage utilisés.

### Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### Adhésif à base de Polyéther Silanisé

Les demanderesses ont découvert que l'utilisation d'une nouvelle famille d'adhésif à base de polyéther silanisé permet d'améliorer le collage d'une bande de mousse polyuréthanne sur une gomme intérieure d'un pneumatique à base de caoutchouc butyle et comportant à sa surface des traces des agents de démoulages utilisés lors de la vulcanisation du pneumatique.

Les adhésifs utilisés sont à base de polyoxypropylènes fonctionnalisés méthoxysilane en bout de chaîne :

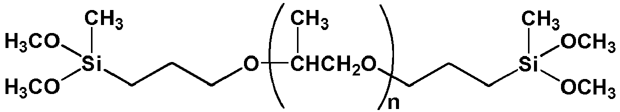

Un polyoxypropylène de haut poids est d'abord fonctionnalisé avec un groupement allyle à chacune des deux extrémités de la chaîne puis est hydrosilylé pour obtenir en final un polyéther téléchélique fonctionnel méthyldiméthoxysilane.

Ces polymères combinent assez bien les avantages des silicones (tenue au vieillissement) et des polyuréthannes (cohésion du matériau). Ils sont exempts d'isocyaniate et de solvant.

Une formulation typique d'adhésif ou mastic à base de polyéther silanisé peut contenir en plus du polyéther fonctionnel : charge(s), plastifiant, pigment, promoteur d'adhésion, agent de déshydratation, catalyseur, agent thixotrope et optionnellement antioxydant et/ou stabilisant UV suivant l'usage.

Un exemple de formulation (Kaneka DKB-5 sealant)^{(**1**)} est présenté dans le tableau suivant :

| ***Type de composant*** | ***Nature du composant*** | ***pce*** | ***pcm*** |
|---|---|---|---|
| Polyéther silanisé (STPE) | S303H (Kaneka Corporation) | 100 | 33 |
| Charge | Carbonate de calcium (CaCO3) | 120 | 40 |
| Plastifiant | Di-iso-undécyl-phtalate (DIUP) | 50 | 16.6 |
| Pigment | Oxyde de titane blanc (TiO2) | 20 | 6.6 |
| Agent thixotrope | Cire polyamide ou Silice pyrogénée | 5 | 1.7 |
| Agent de déshydratation | Vinyltriméthoxysilane | 2 | 0.7 |
| Promoteur d'adhésion | N-2-aminoéthyl-3-aminopropyltriméthoxysilane | 3 | 1 |
| Catalyseur durcisseur | Bis-acétylacétonate de dibutyl-étain | 1.5 | 0.5 |
| ***Total*** | | ***301.5*** | ***100*** |

| | | | |
|---|---|---|---|
| ^{(**1**)} CABOT - CAB-O-SIL TS-720 in MS-Polymer Sealants (2010) pce: partie en poids pour 100 parties d'élastomère, ici le polyéther silanisé ; pcm : pourcentage en poids relativement à 100 g d'adhésif. | | | |

Après application de l'adhésif à base de polyéther silanisé (Silyl-Terminated PolyEther ou STPE), celui-ci polymérise avec l'humidité de l'air ^{(**2**)}.

Cette polymérisation s'effectue en deux étapes :
Étape 1 : Conversion par hydrolyse du méthoxysilane en silanol : 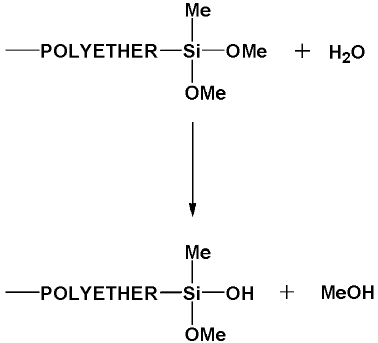
Étape 2 : Condensation du silanol avec un méthoxysilane pour former un pont siloxane : 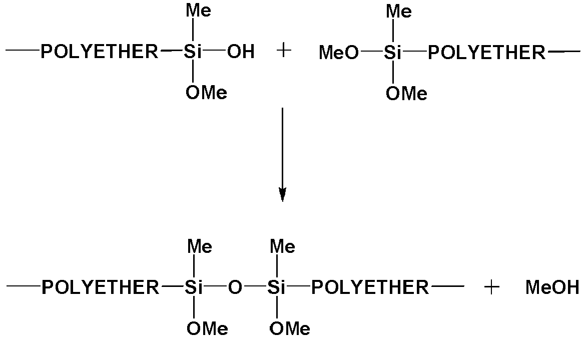 ^{(**2**)} CRAY VALLEY - One-component Moisture Curing Methoxysilane Sealants (2001)

Des adhésifs à base de polyéther silanisé sont disponibles commercialement notamment auprès de la société Bostik : BOSTIK-Simson-ISR-7003, c'est un adhésif mono-composant.

### Gomme Intérieure

Par caoutchouc butyle, on entend usuellement un homopolymère d'isobutylène ou un copolymère d'isobutylène avec de l'isoprène (ce caoutchouc butyle fait partie des élastomères diéniques), ainsi que les dérivés halogénés, en particulier généralement bromés ou chlorés, de ces homopolymères et copolymères d'isobutylène et isoprène.

On citera à titre d'exemples de caoutchouc butyle convenant particulièrement à la réalisation de l'invention : les copolymères d'isobutylène et d'isoprène (IIR), les caoutchoucs bromo-butyle tels que le copolymère bromo-isobutylène-isoprène (BIIR) et les caoutchoucs chloro-butyle tels que le copolymère chloro-isobutylène-isoprène (CIIR).

Par extension de la définition précédente, on inclura également sous l'appellation « caoutchouc butyle » des copolymères d'isobutylène et de dérivés de styrène tels que les copolymères d'isobutylène et méthylstyrène bromé (BIMS) dont fait notamment partie l'élastomère nommé « EXXPRO » commercialisé par la société Exxon.

Le document WO2012010667 (A1) comporte notamment des exemples de formulation de composition pour gomme intérieure à base de caoutchouc butyle.

### Mousse de polyuréthanne

La mousse de la bande amortissante de bruit est usuellement une mousse de polyuréthanne à cellules ouvertes. Le polyuréthanne peut être à base de polyester ou de polyéther. De préférence, sa densité est comprise entre 0,010 et 0,040 g/cm³.

Un exemple commercial d'une telle mousse est la mousse Metzonor 023 de Metzeler Schaum GmbH.

C'est une bande flexible très légère.

### Description des Figures

La seule figure annexée représente de manière très schématique (notamment sans respect d'une échelle spécifique) un exemple de coupe radiale d'un bandage pneumatique ou pneumatique pour véhicule automobile à armature de carcasse radiale, conforme à l'invention, ce pneumatique étant à l'état cuit (c'est-à-dire vulcanisé).

### Pneumatique avec une bande de mousse amortissante

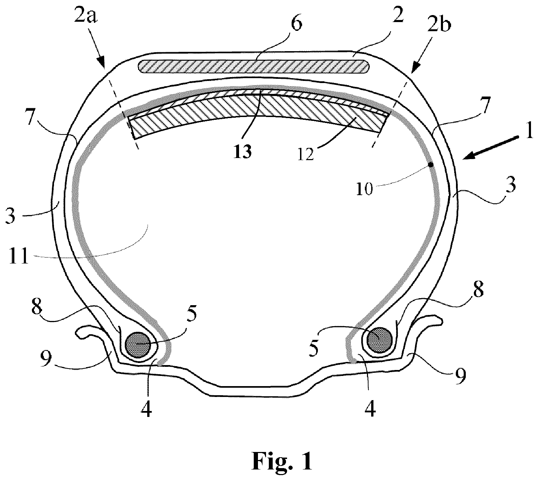

Le pneumatique 1 de la figure 1 comporte une zone sommet 2 renforcée par une armature de sommet ou ceinture 6, deux flancs 3 et deux bourrelets inextensibles 4, chacun de ces bourrelets 4 étant renforcé avec une tringle 5. La zone sommet 2 délimitée latéralement par deux épaules (2a, 2b) est surmontée d'une bande de roulement (non représentée sur cette figure schématique, pour simplification), la ceinture 6 étant par exemple constituée d'au moins deux nappes croisées superposées renforcées par des câbles métalliques. Une armature de carcasse 7 est enroulée autour des deux tringles 5 dans chaque bourrelet 4, le retournement 8 de cette armature 7 étant par exemple disposé vers l'extérieur des pneumatiques qui sont ici représentés montés sur leur jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du bandage pneumatique qui est situé à mi-distance des deux bourrelets 4 et passe par le milieu de l'armature de sommet 6).

Ce pneumatique 1 comporte en outre, de manière bien connue, une couche de gomme intérieure 10 (communément appelée " gomme intérieure " ou " *inner liner* ") qui définit la face radialement interne du pneumatique, au contact de la cavité de gonflage 11. Cette couche 10 étanche à l'air permet le gonflement et le maintien sous pression du pneumatique 1 ; ses propriétés d'étanchéité lui permettent de garantir un taux de perte de pression relativement faible, permettant de maintenir le pneumatique gonflé, en état de fonctionnement normal, pendant une durée suffisante, normalement de plusieurs semaines ou plusieurs mois.

Ce pneumatique conforme à l'invention a sa paroi interne 10 au moins en partie recouverte, du côté de la cavité 11, d'une bande 12 de mousse en polyuréthanne apte à absorber en partie le bruit de cavité. Ce pneumatique est caractérisé en ce que, entre cette couche 12 et la gomme intérieure 10 se trouve une couche d'adhésif 13 à base d'un polyéther silanisé. La couche d'adhésif 13 assure le maintien en place de la bande de mousse amortissante 12.

Conformément à un mode de réalisation possible de l'invention, la couche 12 peut recouvrir, toujours sur sa face radialement interne, une partie seulement de la couche 10 étanche à l'air, dans ce cas préférentiellement dans la zone sommet du pneumatique, comme illustré par exemple à la figure 1.

### Mise en place d'une bande de mousse amortissante

Le pneumatique 1 à équiper d'une bande de mousse amortissante est un pneumatique neuf, c'est-à-dire vulcanisé, prêt à être utilisé. Ce pneumatique est choisi pour être équipé dans une phase additionnelle de fabrication d'une bande de mousse amortissante.

La mousse de polyuréthanne est usuellement fabriquée en blocs de grande taille puis découpée par le fabricant aux dimensions voulues pour l'application visée.

Dans l'exemple de la figure 1, les dimensions de la bande de mousse sont de l'ordre de 100 à 150 mm de largeur axiale, de l'ordre de 25 à 35 mm de hauteur radiale et de longueur de l'ordre de 2 m, c'est-à-dire la circonférence intérieure de la gomme intérieure du pneumatique.

La première étape de la mise en place de la bande de mousse est, de préférence, de nettoyer la surface intérieure du pneumatique, la paroi de la gomme intérieure, au moyen d'un jet d'eau haute pression. Ce nettoyage permet de retirer la plus grande partie des agents de démoulage qui ont été mis sur cette surface avant la vulcanisation du pneumatique pour faciliter le décollage de la membrane de cuisson du moule de vulcanisation du pneumatique.

Après le nettoyage, la surface de la gomme intérieure est séchée.

On applique ensuite sur la surface de la gomme intérieure et/ou sur la surface radialement extérieure de la bande de mousse une couche d'adhésif à base de polyéther silanisé. Cette application peut consister en l'application d'un ou plusieurs cordons d'adhésif soit en forme d'hélice soit en forme sinusoïdale ; on peut aussi effectuer l'application d'une couche régulière sur l'ensemble des surfaces de contact. Une application de la colle par pulvérisation est également possible : dans ce cas elle peut se faire à température plus élevée pour favoriser la technique de pulvérisation (baisse de la viscosité de la colle).

On met en place la bande de mousse contre la surface de la gomme intérieure.

De préférence, on presse les deux surfaces de contact de la gomme intérieur et de la mousse, par exemple par rouletage.

Puis, on laisse réticuler la couche d'adhésif à température ambiante comme il a été décrit précédemment.

La bande de mousse peut être mise au préalable sous forme d'anneau en collant les deux extrémités ; ce collage peut aussi être effectué après la mise en place dans le pneumatique.

La mise en place d'une bande de mousse telle que précédemment décrite n'est qu'un exemple de réalisation. Il est aussi possible de coller à l'aide d'un adhésif à base de polyéther silanisé plusieurs bandes de mousse, continues ou non, de géométries régulières ou non, telles que décrites par exemple dans le document EP 1 381 528 B.

La réticulation de la couche d'adhésif crée deux liaisons de grande qualité : la première est la liaison entre la mousse de polyuréthanne et l'adhésif, cette liaison est liée à un réseau interpénétré à travers les cellules ouvertes de la mousse de polyuréthanne ; la seconde est la liaison entre l'adhésif et la gomme intérieure, cette liaison étant aussi liée à un réseau interpénétré provenant de la polycondensation des oligomères fonctionnels alcoxysilanes.

En effet, les chaines macromoléculaires de la gomme intérieure et de l'adhésif polyéther silanisé sont partiellement compatibles ce qui permet à une diffusion intermoléculaire entre les chaines macromoléculaires d'intervenir lors de la mise en contact du cordon adhésif contre la gomme intérieure.

De plus, cette diffusion est favorisée d'une part par la bonne mobilité du polyéther silanisé (pas encore réticulé) et d'autre part par la présence de petites molécules comme le promoteur d'adhésion, l'agent de déshydratation et même le plastifiant (les trois agissant comme pseudo-solvant). Bien qu'elle ne soit que très superficielle, cette diffusion intermoléculaire est capable de générer en final un réseau interpénétré après réticulation du polyéther silanisé. Cet enchevêtrement des molécules de chacun des deux matériaux, avec disparition de l'interface et création d'une interphase sur une faible épaisseur, doit être responsable de la bonne adhésion observée et mesurée.

### Tests

### Test de pelage manuel

Un cordon d'adhésif a été placé sur une bande de pneumatique (coupe) d'environ 25 mm de largeur et 200 mm de longueur, puis l'adhésif a été étalé avec une spatule, une bande de mousse de dimensions similaires a été mise en contact puis pressée contre la bande de pneumatique par rouletage. Après réticulation de l'adhésif, les éprouvettes ainsi réalisées ont été pelées manuellement pour déterminer le lieu de la rupture.

### Tests de vieillissement humide et de fatigue

Les éprouvettes réalisées pour les tests de vieillissement humide et les tests de fatigue sont constituées d'une bande de pneumatique (coupe) d'environ 25 mm de largeur et 200 mm de longueur sur laquelle est déposé (côté intérieur de la gomme intérieure) un cordon de colle de 4 mm de diamètre au centre et sur toute la longueur. L'intérêt du dépôt d'un cordon plutôt que de réaliser un assemblage complet gomme intérieur/adhésif/mousse de polyuréthanne est de travailler sur la liaison entre l'adhésif et la gomme intérieure. En effet, cette liaison est plus structurale et présente de plus grandes performances que la liaison colle/mousse. Les résultats de pelage de cordon sont donc ainsi plus discriminants que les valeurs de pelage d'un assemblage complet avec une bande de mousse collée.

Des tests de fatigue ont aussi été réalisés.

Les bandes issues de coupes de pneumatique ont été sollicitées dans les conditions suivantes, les cordons d'adhésif restant libres :
- Test dynamique de torsion alternée ;
- Angle variable entre +6 et -6 degrés ;
- Fréquence de sollicitation : 20 Hz ;
- Température ambiante : 60°Celcius ;
- Humidité : 100% d'humidité relative (HR) ;
- Nombre de cycles : 5 10⁶ (trois jours de test environ).

### Résultats des tests

Une comparaison des performances de collage entre une gomme intérieure et une mousse de polyuréthanne a été faite dans le cas d'un adhésif à base de silicone et d'un adhésif à base d'un polyéther silanisé :
- Adhésif silicone : HENKEL-Loctite-5970 (mono-composant) ;
- Adhésif polyéther silanisé : BOSTIK-Simson-ISR-7003 (mono-composant) ;
- Mousse polyuréthanne référencée : METZELER-Metzonor-023 (informations issues de la fiche technique METZELER : masse volumique = 23+/-2 kg/m³ (NF EN ISO 845) et déformation rémanente <10% (NF EN ISO 1856)).

Un premier essai de pelage manuel a été réalisé après quatre jours de séchage des couches adhésives. Les résultats montrent que pour les deux adhésifs, la mousse se déchire. Il y a une rupture cohésive dans la mousse de polyuréthanne.

Le tableau 1 ci-dessous donne les résultats de collage après vieillissement humide.

**Tableau 1**

| | | | Silicone HENKEL Loctite 5970 | Polyéther silanisé BOSTIK Simson ISR 7003 |
|---|---|---|---|---|
| Température ambiante (témoin) | 12 jours à 23°C et 50% HR | Force pelage (N/cm) | **14,0** | 24,7 |
| | | Faciès | Rupture Cohésive | Rupture Cohésive |
| Vieillissement humide | D'abord 6 jours à 23°C et 50% HR puis 6 jours à 70°C et 100% HR | Force pelage (N/cm) | **7,0** | **39,9** |
| | | Faciès | Rupture Cohésive | Rupture Cohésive |

| | | | | |
|---|---|---|---|---|
| HR : humidité relative | | | | |

Les joints adhésifs de la colle à base de polyéther silanisé, comme de la colle silicone, ne sont pas altérés par le vieillissement humide et présentent même des valeurs de pelage supérieures tout en gardant un faciès intéressant : dans tous les cas on observe une rupture cohésive dans l'adhésif et non une rupture adhésive à l'interface entre la gomme intérieure et le cordon de l'adhésif.

Le tableau 2 donne les résultats de la comparaison après un test de fatigue.

**Tableau 2**

| | | | Silicone HENKEL Loctite 5970 | Polyéther silanisé BOSTIK Simson ISR 7003 |
|---|---|---|---|---|
| Test de fatigue | Témoin sans fatigue (idem témoin du Tableau 1) | Force pelage (N/cm) | **18,4** | **22,7** |
| | 3 jours à 60°C, 100% HR et 5 millions de cycles | Force pelage (N/cm) | **25,8** | **42,0** |
| | | Faciès | Rupture Cohésive | Rupture Cohésive |

Les résultats de pelage après le test de fatigue mettent en évidence le très bon comportement de la colle à base d'un polyéther silanisé. Le témoin sans fatigue permet de confirmer la bonne reproductibilité du collage et par conséquent de garantir une bonne confiance portée à l'ensemble des résultats d'adhésion concernant cette famille d'adhésifs.

## Revendications

1. Pneumatique comportant une gomme intérieure faisant face à une cavité interne du pneumatique, une couche adhésive disposée sur ladite gomme intérieure et une bande de mousse amortissante de bruit fixée à ladite gomme intérieure par ladite couche adhésive, **caractérisé en ce que** ladite couche adhésive est à base d'un polyéther silanisé.

2. Pneumatique selon la revendication 1, dans lequel le polyéther silanisé est un polyéther téléchélique fonctionnel alkoxysilane.

3. Pneumatique selon la revendication 2, dans lequel l'alkoxysilane est le méthyldiméthoxysilane.

4. Pneumatique selon l'une quelconque des revendications précédentes, dans lequel le polyéther est un polyoxypropylène.

5. Pneumatique selon l'une quelconque des revendications précédentes, dans lequel la mousse de la bande de mousse amortissante est une mousse de polyuréthanne à cellules ouvertes.

6. Pneumatique selon l'une quelconque des revendications précédentes, dans lequel la bande de mousse est une bande continue circonférentiellement.

7. Procédé de fixation d'une bande de mousse amortissante de bruit sur la surface de la gomme intérieure d'un pneumatique neuf, dans lequel :
- on applique sur la surface de la gomme intérieure et/ou sur la surface radialement extérieure de la bande de mousse une couche d'adhésif à base de polyéther silanisé ;
- on met en place la bande de mousse contre la surface de la gomme intérieure ; et
- on laisse réticuler la couche d'adhésif.

8. Procédé selon la revendication 7, dans lequel, avant de fixer la bande de mousse amortissante de bruit sur la surface de la gomme intérieure du pneumatique,
- on traite la surface de la gomme intérieure dudit pneumatique avec un jet d'eau haute pression pour nettoyer ladite surface ; et
- on sèche la surface de la gomme intérieure.

9. Procédé selon l'une des revendications 7 et 8,dans lequel le polyéther silanisé est un polyéther téléchélique fonctionnel alkoxysilane.

10. Procédé selon l'une quelconque des revendications 7 à 9, dans lequel l'alkoxysilane est un méthyldiméthoxysilane.

11. Procédé selon l'une quelconque des revendications 7 à 10, dans lequel le polyéther est un polyoxypropylène.

12. Procédé selon l'une quelconque des revendications 7 à 11, dans lequel la mousse de la bande de mousse amortissante est une mousse de polyuréthanne à cellules ouvertes.

13. Procédé selon l'une quelconque des revendications 7 à 12, dans lequel la bande de mousse est une bande continue circonférentiellement.

14. Procédé selon l'une quelconque des revendications 7 à 13, dans lequel l'adhésif est appliqué par pulvérisation.

## Patentansprüche

1. Reifen, der einen Innengummi aufweist, der einem inneren Hohlraum des Reifens zugewandt ist, eine Klebstoffschicht, die an dem Innengummi angeordnet ist, und einen Streifen aus schalldämpfendem Schaum, der an dem Innengummi mit der Klebstoffschicht befestigt ist, **dadurch gekennzeichnet, dass** die Klebstoffschicht auf einem silanisierten Polyether basiert.

2. Reifen nach Anspruch 1, wobei der silanisierte Polyether ein alkoxysilan-funktionalisierter telecheler Polyether ist.

3. Reifen nach Anspruch 2, wobei das Alkoxysilan Methyldimethoxysilan ist.

4. Reifen nach einem der vorhergehenden Ansprüche, wobei der Polyether ein Polyoxypropylen ist.

5. Reifen nach einem der vorhergehenden Ansprüche, wobei der Schaum des Streifens aus einem dämpfenden Schaum ein offenzelliger Polyurethanschaum ist.

6. Reifen nach einem der vorhergehenden Ansprüche, wobei der Schaumstreifen ein in Umfangsrichtung durchgängiger Streifen ist.

7. Verfahren zur Befestigung eines Streifens aus einem schalldämpfendem Schaum an der Oberfläche des Innengummis eines neuen Reifens, wobei:
- auf der Oberfläche des Innengummis und/oder auf der radial außen liegenden Fläche des Schaumstreifens eine Klebstoffschicht auf Basis von silanisiertem Polyether aufgebracht wird;
- der Schaumstreifen gegen die Oberfläche des Innengummis gelegt wird; und
- die Klebstoffschicht vernetzen gelassen wird.

8. Verfahren nach Anspruch 7, wobei vor dem Befestigen des Streifens aus einem schalldämpfendem Schaum an der Oberfläche des Innengummis des Reifens
- die Oberfläche des Innengummis des Reifens mit einem Hochdruckwasserstrahl behandelt wird, um die Oberfläche zu reinigen, und
- die Oberfläche des Innengummis getrocknet wird.

9. Verfahren nach Anspruch 7 oder 8, wobei der silanisierte Polyether ein alkoxysilan-funktionalisierter telecheler Polyether ist.

10. Verfahren nach einem der Ansprüche 7 bis 9, wobei das Alkoxysilan ein Methyldimethoxysilan ist.

11. Verfahren nach einem der Ansprüche 7 bis 10, wobei der Polyether ein Polyoxypropylen ist.

12. Verfahren nach einem der vorhergehenden Ansprüche 7 bis 11, wobei der Schaum des Streifens aus einem dämpfenden Schaum ein offenzelliger Polyurethanschaum ist.

13. Verfahren nach einem der vorhergehenden Ansprüche 7 bis 12, wobei der Schaumstreifen ein in Umfangsrichtung durchgängiger Streifen ist.

14. Verfahren nach einem der Ansprüche 7 bis 13, wobei der Klebstoff mittels Sprühen aufgebracht wird.

## Claims

1. Tyre comprising an inner liner facing an internal cavity of the tyre, an adhesive layer positioned on said inner liner and a strip of noise-damping foam attached to said inner liner by said adhesive layer, **characterized in that** said adhesive layer is based on a silanized polyether.

2. Tyre according to Claim 1, in which the silanized polyether is an alkoxysilane-functional telechelic polyether.

3. Tyre according to Claim 2, in which the alkoxysilane is methyldimethoxysilane.

4. Tyre according to any one of the preceding claims, in which the polyether is a polyoxypropylene.

5. Tyre according to any one of the preceding claims, in which the foam of the damping foam strip is an open-cell polyurethane foam.

6. Tyre according to any one of the preceding claims, in which the foam strip is a circumferentially continuous strip.

7. Method of attaching a strip of noise-damping foam to the surface of the inner liner of a new tyre, in which:
- a layer of adhesive based on silanized polyether is applied to the surface of the inner liner and/or to the radially outer surface of the foam strip;
- the foam strip is positioned against the surface of the inner liner; and
- the layer of adhesive is left to crosslink.

8. Method according to Claim 7, in which, before attaching the strip of noise-damping foam to the surface of the inner liner of the tyre,
- the surface of the inner liner of said tyre is treated with a high-pressure water jet in order to clean said surface; and
- the surface of the inner liner is dried.

9. Method according to either of Claims 7 and 8, in which the silanized polyether is an alkoxysilane-functional telechelic polyether.

10. Method according to any one of Claims 7 to 9, in which the alkoxysilane is a methyldimethoxysilane.

11. Method according to any one of Claims 7 to 10, in which the polyether is a polyoxypropylene.

12. Method according to any one of Claims 7 to 11, in which the foam of the damping foam strip is an open-cell polyurethane foam.

13. Method according to any one of Claims 7 to 12, in which the foam strip is a circumferentially continuous strip.

14. Method according to any one of Claims 7 to 13, in which the adhesive is applied by spraying.
